# EUROPEAN PATENT APPLICATION

(11) **EP 1 318 314 A2**
(43) Date of publication of application: **11.06.2003**
(21) Application number: 02007971.1
(22) Date of filing: 10.04.2002
(51) Int. Cl.: F16B 13/08, F16B 2/04, F16B 9/02

(54) **Expansion device for connecting a first linear element having any cross section to a second element provided with a hole to house the first element**

(30) Priority: 07.12.2001 IT PD010287
(71) Applicant: Italmanubri S.p.A., 31037 Loria(Treviso) (IT)
(72) Inventor: Spricigo, Alessandro, 31037 Loria (Treviso) (IT)
(74) Representative: Gustorf, Gerhard, Dipl.-Ing.

(57) **Abstract**

The expansion device has a linear shape and is divided in three parts, a central part (S1) and two lateral parts (S2); the central part (S1) is triangular, with one side (S1s) along the surface of the composite expansion device and the other two sides (S1e) facing towards the two lateral parts (S2); the lateral parts (S2) have inclined surface (S2e) in contact with the central part (S1); a hole (So) parallel to the longitudinal axis of the expansion device passes through the central part and the lateral parts and houses an expansion screw (Sv) that, when tightened, brings the two lateral parts (S2) near each other, thus causing the movement of the central part (S1) towards the outside. The element (A) to be connected to the first linear element (M) is provided with a hole to house the first linear element (M) and the section of the expansion device is such as to adapt to the surface of the linear element (M) and to the walls of the hole in the element (A) that houses the first linear element. The hole in the clement (A) to be connected to the first linear element (M) can have the generic shape of a drop and consequently the cross section of the connection device is similar to a trapezium, said trapezium having the minor base arced, convex and radiused to the oblique sides, which are such as to rest on the inner surface of the generically drop-shaped hole, while the major base is shaped in such a way as to adapt to the surface of the first linear element (M) to be connected.

## Description

The present invention concerns the devices used for fastening linear elements such as tubes, rods and other objects like supports, shelves, couplings, etc.. More precisely, it comprises an expansion device for fastening solid or hollow linear elements with circular cross section to objects made of composite and non-composite metallic materials.

In many applications it is necessary to fasten linear elements, such as tubes, rods and similar elements to other types of elements like, for example, shelves, supports and similar objects, with the need to modify their position with respect to each other without damaging or exerting excessive stress on the linear element or the object to which the linear element is to be fastened.

For example, for the construction and assembly of bicycles, it is necessary to fasten the bend of the handlebars to the relevant coupling that connects it to the fork tube and to fasten the saddle to the saddle tube.

In many cases it is necessary to adopt a connection between the linear element and the object to which it must be fastened that makes it possible to modify the position of the two parts with respect to each other, including either the position along the linear element and the angular position of the two parts with respect to each other.

At present linear elements are fastened by means of a vice, that is, an open ring provided with tightening screw: when the screw is tightened, the vice that fastens the linear element is tightened, too.

The connection with vice allows the position of the two parts with respect to each other to be changed and does not damage the linear element or the object connected to said linear element, but involves a series of operations and successive processings.

When special materials are used, like for example composite materials, nylon, thermoformed materials, metal alloys, further problems arise that are related to the resistance of these materials to special or localized stress that makes the adoption of the connection with vice almost impossible.

For example, in the bicycle industry, especially for the construction of bicycles destined for races, the use of special or composite materials is increasing, in order to reduce the overall weight of the bicycle and at the same time maintain its resistance and sturdiness, but with these materials it is not possible to make the usual connections between the parts.

The object of this patent is a new expansion device for connecting a linear element with any cross section to another element provided with a hole to house the first linear element.

The aim of the new device is to guarantee a firm connection of linear elements with any cross section to other elements provided with holes to house the first linear elements, at the same time permitting the successive change of position of both elements with respect to each other.

Another aim of the device is to ensure the connection between a first linear element and another element provided with a hole to house the first linear element, with no need to carry out further holes, threads or other operations.

A further goal is to ensure the connection between a linear element and another element provided with a hole to house the first linear element, wherein both elements are solid or hollow elements made of materials that are sensible to special or localized stress.

The new expansion device to be used to connect a linear element with any cross section to another element provided with a hole to house the first linear element is constructed in such a way as to be housed in the hole together with the linear element and comprises several parts, of which at least one parts expands and exerts a certain pressure between the wall/walls of the hole and the surface of the linear element.

The new expansion device has a linear shape and is divided in three parts, a central triangular part and two lateral symmetric parts with inclined surfaces in contact with the central part; a hole parallel to the longitudinal axis of the fastening element passes through the central and lateral parts and houses an expansion screw that when tightened brings the two lateral parts nearer to each other, so that they cause the expansion of the central part towards the outside.

The characteristics of the new connection device will be highlighted in greater detail in the following description of one among many possible applications of the invention, with reference to the enclosed drawings; in particular, for the description it is considered easier to refer to a linear element having circular cross section and to an object housing said linear element provided with a generically drop-shaped hole; the various concepts illustrated in the description, however, are to be considered valid also for linear elements having a different cross section and for objects provided with holes having other shapes.

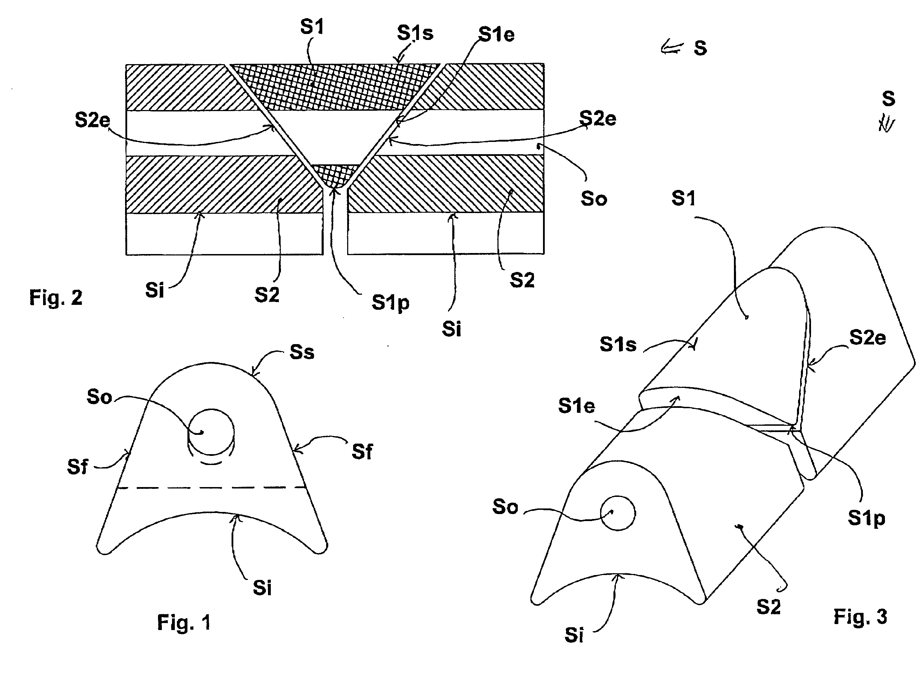

Figure 1 is a front view of the connection device (S), while Figure 2 shows a longitudinal section of the same. Figure 3 is an axonometric view of the connection device (S).

The new connection device (S) has a linear shape with cross section similar to a trapezium (see Figure 1); in particular, the trapezium cross section has the minor base (Ss) arced, convex and radiused to the oblique sides (Sf) and the major base (Si) arced, concave, with the same curving radius as the tubular element (M) to be fastened.

The new connection device (S) is also provided with a hole (So) parallel to its longitudinal axis.

The new connection device (S) having the shape described above comprises three parts (S1, S2) that are complementary to one another.

Making reference to the longitudinal cross section represented in Figure 2, it is possible to observe that the new connection device (S) comprises a central part (S1) and two lateral parts (S2).

The central part (S1) is triangular, with one side along the minor arced convex base (S1s) of the trapezium-shaped cross section and the other sides (S1e) facing towards the lateral parts (S2). Consequently, the point (S1p) of the central triangular part (S1) is directed towards the major concave base (Si) of the connection device (S).

On the other hand, the two lateral parts (S2) have inclined surface (S2e) in contact with the central part (S1).

The three parts (S1, S2) of the connection device (S) are all crossed by the hole (So) described above.

The connection device (S) comprised as described includes also a screw (Sv), if necessary provided with an eccentric lever head (Svl), which passes through the central hole (So).

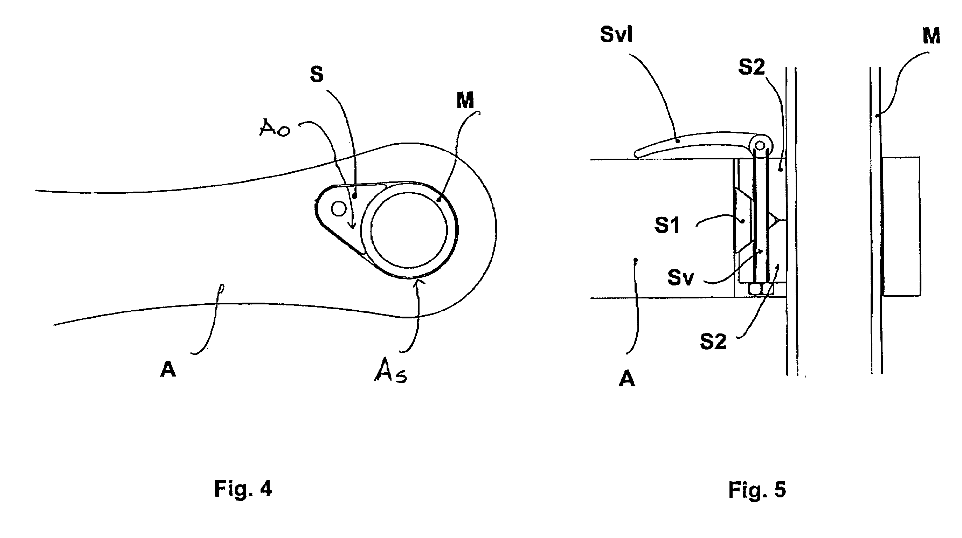

Figures 4 and 5 show a view and a cross section, respectively, of the new composite expansion device for connecting the bend of handlebars (M) to the relevant coupling (A).

The coupling (A) is provided with a generically drop-shaped hole (Ao) in which the bend (M) of the handlebar is inserted in such a way as to occupy the largest part of said drop-shaped hole (Ao). The new connection device (S) occupies the remaining space in the drop-shaped hole (Ao) in the coupling (A).

When the screw (Sv) is tightened, for example with a lever (Svl), the two lateral parts (S2) of the connection device (S) are brought near each other and, owing to the effect of the inclined walls (S1e, S2e), they push the central part (S1) towards the outside of the connection device (S) itself.

The expansion produces a thrust on the inclined walls of the drop-shaped hole (Ao) and on the surface of the bend (M), locking it inside the drop-shaped hole (Ao) in the coupling (A).

The new connection device for linear elements described above offers considerable advantages:
no part needs threading, neither the first linear element (M), nor the element (A) that houses the first linear element (M);
the closing of the eccentric lever (Svl) and the expansion of the connection device (S) do not cause any particular or localized stress on the linear element (M) or on the element (A) that houses the first linear element (M);
the new connection device can be used indifferently for elements made of metal, metal alloys, composite materials, nylon or other materials with any composition and in different combinations;
the new connection device can be used for fastening handlebars and/or saddles and/or other parts of bicycles and also for fastening any other linear element in other types of applications;
the drop shape of the hole (Ao) seems to be the most effective for the achievement of the best aesthetic-mechanical results, but other shapes are not excluded, for example elliptical, rectangular with a semicircular part , etc.

Therefore, with reference to the above description and the enclosed drawings, the following claims are put forth.

## Claims

1. Expansion device for connecting a first linear element with any cross section to another element provided with a hole to house the first linear element (M), **characterized in that** it has a linear shape and is divided in three parts, a central part (S1) and two lateral parts (S2), and wherein the central part (S 1) is triangular, with one side (S1s) along the surface of the composite expansion device and the other two sides (S1e) facing towards said two lateral parts (S2), and wherein said lateral parts (S2) have inclined surface (S2e) in contact with said central part (S1), and wherein a hole (So) parallel to the longitudinal axis of the expansion device passes through said central part and through said lateral parts and houses a screw (Sv) that, when tightened, brings the two lateral parts (S2) near each other, so that they force said central part (S1) to move towards the outside.

2. Locking device according to claim 1, **characterized in that** the element (A) to be connected to the linear element (M) is provided with a hole suitable for housing the linear element and the connection-expansion device (S) according to claim 1, and wherein the cross section of the connection-expansion device is such as to adapt to the surface of the first linear element (M) and to the walls of the hole present in the element (A) that houses the first linear element.

3. Locking device according to claim 2, **characterized in that** the element (A) to be connected to the first linear element (M) is provided with a hole (Ao) having the generic shape of a drop, and wherein the cross section of the connection-expansion device (S) is similar to a trapezium, with the minor base (Ss) arced, convex and radiused to the oblique sides (Sf) that are such as to rest on the inner surface of the generically drop-shaped hole and major base (Si) shaped so that it adapts to the surface of the first linear element (M) to be connected.
